# EUROPÄISCHE PATENTSCHRIFT

(11) **EP 0 758 704 B1**
(45) Veröffentlichungstag und Bekanntmachung des Hinweises auf die Patenterteilung: **19.05.1999**
(21) Anmeldenummer: 96111228.1
(22) Anmeldetag: 12.07.1996
(51) Int. Cl.: E04B 1/90, B29C 44/30

(54) **Vorrichtung zur Herstellung einer Schalldämmplatte**
Apparatus for manufacturing a sound - insulating panel
Appareil pour la fabrication d'une plaque isolante acoustique

(30) Priorität: 10.08.1995 DE 19529395
(43) Veröffentlichungstag der Anmeldung: 19.02.1997
(73) Patentinhaber: Heinemann, Herbert, D-75181 Pforzheim (DE)
(72) Erfinder: Heinemann, Herbert, D-75181 Pforzheim (DE)
(74) Vertreter: Reimold, Otto, Dipl.-Phys.Dr.

(56) Entgegenhaltungen:
- EP-A- 0 279 551
- EP-A- 0 450 731
- DE-A- 1 404 457
- DE-A- 3 043 745
- DE-A- 3 125 839
- US-A- 2 688 152

## Beschreibung

Die Erfindung betrifft eine Vorrichtung zur Herstellung einer bei Gebäuden für Dächer, Wände und Decken zu verwendenden Schallplatte, die eine aus Schalldämm-Material bestehende Schalldämmlage und an die beiden Seiten der Schalldämmlage angeschäumte Hartschaumstofflagen aufweist, mit einem unteren endlos umlaufenden Transportband und einem oberen endlos umlaufenden, zum unteren Transportband parallelen Transportband, das unter Bildung eines Durchlaufspaltes oberhalb vom unteren Transportband angeordnet ist, wobei in Transportrichtung gesehen vor dem oberen Transportband eine Schaumstoff-Zufuhreinrichtung zum Aufschäumen des die untere Hartschaumstofflage ergebenden Schaumstoffs auf das untere Transportband und eine SchalldämmlageZufuhrstation zum Aufbringen der vorgefertigen Schalldämmlage auf den die eine Hartschaumstofflage ergebenden Schaumstoff angeordnet sind und wobei eine zweite Schaumstoff-Zufuhreinrichtung zum Aufschäumen des die obere Hartschaumstofflage ergebenden Schaumstoffs auf die Schalldämmlage vorhanden ist.

Zur Schalldämmung bei Gebäuden kann man beispielsweise Glaswolle oder Steinwolle als Schalldämm-Material verwenden, das in Platten- oder Mattenform angeboten wird. Dieses Schalldämm-Material wird üblicherweise an der betreffenden Stelle des Gebäudes angebracht, wonach man eine geeignete Verkleidung befestigt, die dem Schalldämm-Material Halt geben und es gegen mechanische Beschädigungen und das Eindringen von Feuchtigkeit schützen soll. Dieses Vorgehen ist verhältnismäßig umständlich und zeitaufwendig. Außerdem erfüllt die Verkleidung die genannten Erfordernisse häufig nur unzureichend, so daß es beispielsweise zu einem Zusammensacken oder Feuchtwerden des Dämmaterials kommen kann. Günstiger ist es deshalb, vorgefertigte Schalldämmplatten zu verwenden, bei denen beiderseits der Schalldämmlage jeweils eine an die Schalldämmlage angeschäumte Hartschaumstofflage angeordnet ist. Aufgrund des Anschäumens erhält man einer flächigen Verbund, so daß ein sandwichartiger Aufbau vorliegt, bei dem die beiden Hartschaumstofflagen die dazwischen angeordnete Schalldämmlage unveränderbar zwischen sich halten. Die Hartschaumstofflagen verleihen der Schalldämmplatte ferner Stabilität und Steifheit und schützen die mittlere Schalldämmlage gegen mechanische Beschädigungen und das Eindringen von Feuchtigkeit. Die Hartschaumstofflagen weisen außerdem gute Wärmedämmeigenschaften auf, so daß man gleichzeitig mit der Schall. dämmung eine Wärmedämmung erhält.

Dazuhin eignen sich die Hartschaumstofflagen als Trägermaterial für eine Platten-Aussenlage, die Bestandteil der Schalldämmplatte sein kann oder erst im Einbauzustand aufgebracht wird. Bei dieser Aussenlage kann es sich also um eine nachträglich befestigte Sichtverkleidung oder einen nachträglich aufgebrachten Verputz, jedoch auch um einen schon fabrikseitig angebrachten Sichtbelag handeln.

Eine im wesentlichen einen solchen Aufbau aufweisende Schalldämmplatte ist beispielsweise aus der EP 0 450 731 Al bekannt. Aus dieser Druckschrift geht jedoch nicht hervor, wie sich eine solche Schalldämmplatte herstellen läßt.

Aus der DE-OS 1 404 457 geht jedoch eine Vorrichtung der eingangs genannten Art hervor, mit der sich Schalldämmplatten im Durchlaufverfahren fertigen lassen. Dabei entspricht die Breite des Durchlaufspaltes zwischen dem unteren Transportband und dem oberen Transportband, die gleich lang sind, im wesentlichen der Dicke der zu fertigenden Schalldämmplatte. Vor der Transportbandanordnung befinden sich die beiden Schaumstoff-Zufuhreinrichtungen zwischen denen hindurch das Schalldämm-Material in Gestalt einer Faserplatte in den Durchlaufspalt eintritt, so daß von beiden Seiten her Schaumstoff aufgebracht wird. Dies ergibt eine während der Fertigung sozusagen schwimmend angeordnete Faserplatte, so daß sich hinsichtlich der Dickenabmessungen der einzelnen Lagen in der fertigen Schalldämmplatte verhältnis undefinierte Verhältnisse ergeben. Es handelt sich eher um ein Eindringen des Schaumstoffs in die Faserplatte, die auf diese Weise im wesentlichen zur Ausfüllung des Durchlaufspaltes verbreitert wird und beim Austritt aus dem Durchlaufspalt beidseitig lediglich mit Schaumstoff kaschiert ist.

Ausgehend hiervon liegt der vorliegenden Erfindung die Aufgabe zugrunde, eine die Herstellung von Schalldämmplatten mit definierten einzelnen Lagen ermöglichende Vorrichtung zu schaffen.

Diese Aufgabe wird erfindungsgemäß dadurch gelöst, daß in Transportrichtung gesehen die Schalldämmlage-Zufuhrstation anschließend and die erste Schaumstoff-Zufuhreinrichtung angeordnet ist, daß die Breite des Durchlaufspaltes zwischen dem unteren Transportband und dem oberen Transportband im wesentlichen der Summe der Dicke der Schalldämmlage und der Dicke der unteren Hartschaumstofflage entspricht, daß in Transportrichtung gesehen hinter dem oberen Transportband ein zweites oberes endlos umlaufendes, zum unteren Transportband paralleles Transportband vorhanden ist, das unter Bildung eines Durchlaufspaltes oberhalb vom unteren Transportband angeordnet ist, wobei die Breite des Durchlaufspaltes zwischen dem unteren Transportband und dem zweiten oberen Transportband im wesentlichen der Dicke der Schalldämmplatte entspricht und die oberen Transporbänder kürzer als das untere Transportband sind, und daß die zweite Schaumstoff-Zufuhreinrichtung zwischen den beiden oberen Transportbändern angeordnet ist.

Bei dieser Vorrichtung werden die beiden Hartschaumstofflagen nacheinander an die mittlere Schalldämmlage angeschäumt, wobei die beiden unterschiedlich breiten Durchlaufspalte dafür sorgen, daß die jeweilige Hartschaumstofflage die gewünschte Dicke erhalt. Somit ergibt sich für die Schalldämmplatte ein sandwichartiger Aufbau, bei dem die beiden Hartschaumstofflagen die dazwischen angeordnete Schalldämmlage veränderbar zwischen sich halten. Die Hartschaumstofflagen verleihen der Schalldämmplatte ferner Stabilität und Steifheit und schützen die mittlere Schalldämmlage gegen mechanische Beschädigungen und das Eindringen von Feuchtigkeit.

Zweckmäßige Ausgestaltungen der Erfindung sind in den Unteransprüchen angegeben.

Ein Ausführungsbeispiel der Erfindung wird nun anhand der Zeichnung erläutert. Es zeigen:
- Fig. 1: eine mit der erfindungsgemäßen Vorrichtung hergestellte Schalldämmplatte in schematischer Darstellung im Querschnitt in Teildarstellung,
- Fig. 2: eine demgegenüber variierte Schalldämmplatte in gleicher Darstellungsweise und
- Fig. 3: eine erfindungsgemäße Vorrichtung zur Herstellung der Schalldämmplatten in schematischer Seitenansicht.

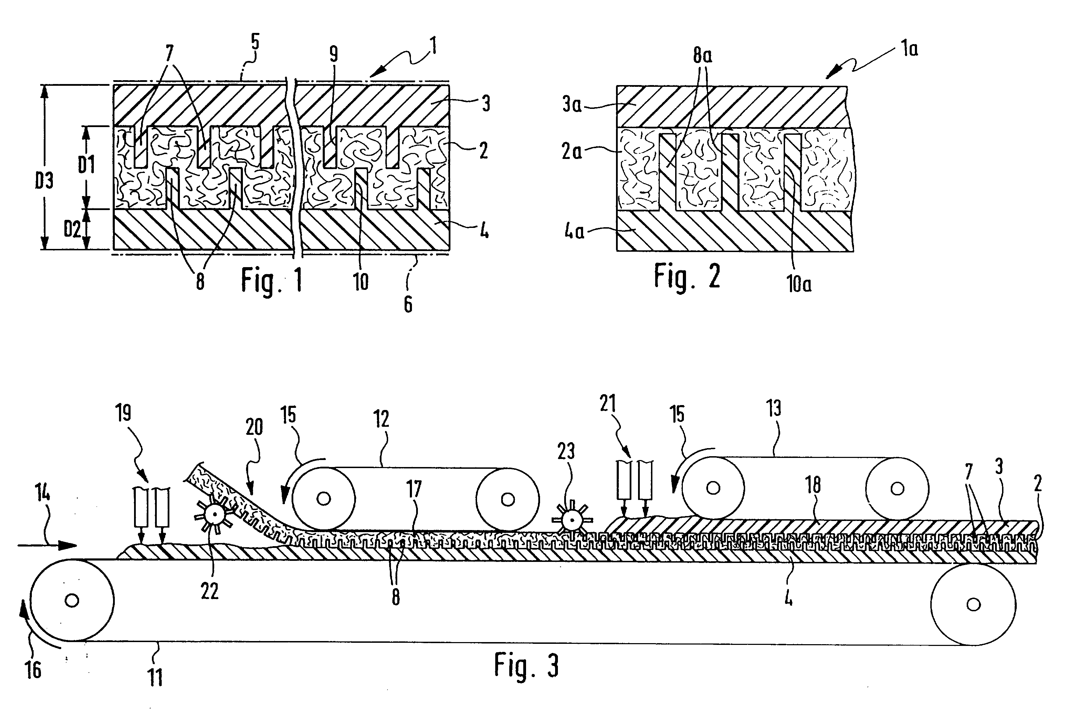

Die aus Fig. 1 bzw. 2 hervorgehende Schalldämmplatte 1; la weist eine mittlere Schalldämmlage 2; 2a sowie zwei Hartschaumstofflagen 3; 3a und 4; 4a auf, die beiderseits der Schalldämmlage 2; 2a angeordnet und an diese angeschäumt sind. Als die Schalldämmlage 2; 2a bildendes Schalldämm-material kommt insbesondere Glas- oder Steinwolle, jedoch auch andere Materialien wie Kork, Schaumbeton (auch "Ytong" genannt) usw. in Frage. Die Hartschaumstofflagen 3; 3a und 4; 4a bestehen zweckmäßigerweise aus Polyurethan.

Diese Schalldämmplatte 1; la ist für das Bauwesen und dabei für die Verwendung bei Dächern, Wänden und Decken gedacht. Sie bildet eine in sich stabile Einheit, bei der zwischen den beiden Hartschaumstofflagen 3; 3a und 4; 4a und der dazwischen angeordneten Schalldämmlage 2; 2a ein fester Verbund vorhanden ist. Die Schalldämmlage 2; 2a kann daher, besteht sie aus nachgiebigem Material wie Glas- oder Steinwolle, nicht zusammensacken. Die Hartschaumstofflagen 3; 3a und 4; 4a schützen die Schalldämmlage 2; 2a ferner gegen mechanische Beschädigungen und das Eindringen von Feuchtigkeit. Sie übernehmen bei leichtgewichtigem Schalldämmaterial außerdem eine tragende Funktion und geben der ganzen Platte Stabilität.

Die erfindungsgemäße Schalldämmplatte 1; la weist somit eine praktisch unbegrenzte Lebensdauer auf und behält dabei ihre schalldämmenden Eigenschaften. Des weiteren besitzt sie, insbesondere auf Grund der Hartschaumstofflagen, auch wärmedämmende Eigenschaften, so daß sie sich bestens für die Verwendung an solchen Stellen eignet, wo sowohl Schallschutz als auch Wärmeschutz gefragt ist.

Die beiden Hartschaumstofflagen 3; 3a und 4; 4a können als Träger für eine strichpunktiert angedeutete Platten-Außenlage 5, 6 dienen, die fabrikseitig angebracht und somit einen Bestandteil der Schalldämmplatte bilden können oder erst auf der Baustelle, das heißt im eingebauten Zustand, aufgebracht werden. Bei den Platten-Außenlagen 5, 6 - es versteht sich, daß auch nur eine Außenlage an einer Plattenseite vorhanden sein kann - kann es sich also beispielsweise um eine Wandverkleidung z.B. aus Holz, Gipskarton usw., einen Putz oder auch um eine fabrikseitig aufgebrachte Sichtlage beispielsweise in Gestalt einer Sandschicht usw. handeln.

Insbesondere bei aus nachgiebigem Material wie Glas- oder Steinwolle bestehender Schalldämmlage 2; 2a ist es zweckmäßig, in der Schalldämmlage 2; 2a quer zur Plattenebene gerichtete, von mindestens einer der Hartschaumstofflagen ausgehende Abstandshalter 7, 8; 8a vorzusehen, die aus mit Bezug auf die Schalldämmlage 2; 2a drucksteiferem Material bestehen. Beim Ausführungsbeispiel nach Fig. 1 stehen von beiden Hartschaumstofflagen 3, 4 jeweils Abstandshalter 7 bzw. 8 ab, während bei der Schalldämmplatte gemäß Fig. 2 nur von einer, nämlich von der Hartschaumstofflage 4a, Abstandshalter 8a abstehen.

Diese Abstandshalter wirken einem Zusammendrücken der Schalldämmplatte 1; 1a in Richtung quer zur Plattenebene entgegen, so daß sie im Falle einer nachgiebigen Schalldämmlage 2; 2a die Schalldämmplatte 1; 1a in dieser Querrichtung so stabilisieren, daß die Platte beträchtliche Querkräfte aufnehmen kann.

Zweckmäßigerweise werden die Abstandshalter 7, 8; 8a von einstückig an die jeweilige Hartschaumstofflage 3, 4; 4a angeformten Hartschaumvorsprüngen gebildet, die jeweils in eine Ausnehmung 9, 10; 10a der betreffenden Schalldämmlage 2; 2a eingeformt sind. Die Schalldämmlage 2; 2a wird also bei der Herstellung der Schalldämmplatte 1; 1a mit den genannten Ausnehmungen 9, 10; 10 versehen, so daß der angeschäumte und die Hartschaumstofflagen ergebende Hartschaum in die Ausnehmungen eindringt.

Bei der Variante nach Fig. 1 reichen die von beiden Hartschaumstofflagen 3, 4 abstehenden Abstandshalter 7, 8 jeweils bis etwa in den mittleren Bereich der Schalldämmlage 2. Dabei sind die Abstandshalter 7 der Hartschaumstofflage 3 und die Abstandshalter 8 der Hartschaumstofflage 4 zweckmäßigerweise in der Plattenebene versetzt zueinander angeordnet.

Die Abstandshalter können auch eine andere Länge als die Abstandshalter 7, 8 aufweisen, beispielsweise indem sie die Schalldämmlage mindestens im wesentlichen ganz durchqueren, wie es beim Ausführungsbeispiel nach Fig. 2 der Fall ist.

Anstelle der einstückig angeformten Abstandshalter 7, 8; 8a könnte es sich auch um von gesonderten Teilen gebildete Abstandshalter handeln, die bei der Plattenherstellung mit ihren Enden in die Hartschaumstofflagen eingebettet werden.

Aus Fig. 3 geht der schematische Aufbau einer Vorrichtung hervor, mit der sich die beschriebenen Schalldämmplatten herstellen lassen. Die Vorrichtung weist ein unteres endlos umlaufendes Transportband 11 und zwei obere endlos umlaufende Transportbänder 12, 13 auf, die alle parallel zueinander ausgerichtet sind. Das untere Transportband 11 ist länger als die beiden oberen Transportbänder 12, 13 zusammen. Die beiden oberen Transportbänder 12, 13 sind oberhalb des unteren Transportbandes 11 in Transportrichtung 14 aufeinanderfolgend angeordnet. Die beiden oberen Transportbänder 12, 13 laufen gleichsinnig in Pfeilrichtung 15 um, die der Umlaufrichtung 16 des unteren Transportbandes 11 entgegengesetzt ist, so daß sich das den oberen Transportbändern 12, 13 zugewandte obere Trum des unteren Transportbandes 11 in der gleichen Richtung wie das dem unteren Transportband 11 zugewandte untere Trum der beiden oberen Transportbänder 12, 13 bewegt. Bei allen Transportbändern 11, 12, 13 handelt es sich um sogenannte Plattenbänder, die sich aus in Bewegungsrichtung aufeinanderfolgenden, quer hierzu, das heißt in Fig. 3 rechtwinkelig zur Zeichenebene, länglichen Quergliedern zusammensetzt, die entlang den gerade verlaufenden Bandlaufstrecken dicht aneinander anliegen und eine ununterbrochene Bandfläche bilden.

Die beiden oberen Transportbänder 12, 13 liegen mit ihrem unteren Trum dem oberen Trum des unteren Transportbandes 11 jeweils unter Bildung eines Durchlaufspaltes 17 bzw. 18 gegenüber. Dabei entspricht die in Abstandsrichtung der Bänder gemessene Breite des Durchlaufspaltes 17 zwischen dem unteren Transportband 11 und dem in Transportrichtung 14 gesehen ersten oberen Transportband 12 im wesentlichen der Summe der Dicke D1 der Schalldämmlage 2 und der Dicke D2 einer der Hartschaumstofflagen, beim Ausführungsbeispiel der Hartschaumstofflage 4. Die in der gleichen Richtung gemessene Breite des Durchlaufspaltes 18 zwischen dem unteren Transportband 11 und dem zweiten oberen Transportband 13 entspricht dagegen im wesentlichen der Dicke D3 der Schalldämmplatte 1 (eventuelle Platten-Außenlagen 5, 6 sind hier nicht berücksichtigt, das heißt, es handelt sich um die Summe der Dicken der Schalldämmlage und der beiden Hartschaumstofflagen).

Ferner ist in Transportrichtung 14 gesehen vor dem ersten oberen Transportband 12 eine erste Schaumstoff-Zufuhreinrichtung 19 vorhanden, mit der der die eine Hartschaumstofflage 4 ergebende Schaumstoff bzw. die diesen bildenden Schaumstoffkomponenten, im Falle von Polyurethan Isozyanat und Polyol, zugeführt und auf das untere Transportband 11 aufgeschäumt wird. Anschließend an diese erste Schaumstoff-Zufuhreinrichtung 19 befindet sich noch vor dem ersten oberen Transportband 12 eine Schalldämmlage-Zufuhrstation 20, an der die vorgefertigte Schalldämmlage 2 als Strangmaterial von oben her zugeführt und auf den die eine Hartschaumstofflage 4 ergebenden und an der ersten Schaumstoff-Zufuhreinrichtung 19 auf das untere Transportband 11 aufgeschäumten Schaumstoff aufgebracht wird. Der die Hartschaumstofflage 4 ergebende Schaumstoff und die auf ihm liegende Schalldämmlage 2 durchlaufen dann den ersten Durchlaufspalt 17, in dem der Schaumstoff vollends aufschäumt, so daß hier das Anschäumen der Hartschaumstofflage 4 an die Schalldämmlage 2 erfolgt.

Im Zwischenraum zwischen den beiden oberen Transportbändern 12, 13 ist noch eine zweite Schaumstoff-Zufuhreinrichtung 21 angeordnet, mit der der die andere Hartschaumstofflage 3 ergebende Schaumstoff bzw. dessen Schaumstoffkomponenten zugeführt und auf die nach dem Verlassen des ersten oberen Transportbandes 12 freie Oberseite der Schalldämmlage 2 aufgeschäumt wird. Sodann durchläuft die jetzt dreilagige Anordnung (Schalldämmlage 2 und die beiden Hartschaumstofflagen 3, 4) den zweiten Durchlaufspalt 18, in dem das anschließend austretende und in nicht dargestellter Weise zu den Schalldämmplatten 1 abgelängte Strangmaterial fertiggeformt wird.

Die in Fig. 3 dargestellte Vorrichtung dient zur Herstellung der Schalldämmplatte 1 nach Fig. 1, die von beiden Hartschaumstofflagen 3, 4 wegragende Abstandshalter 7, 8 aufweist, die in beidseitig in die Schalldämmlage 2 eingebrachte Ausnehmungen 9, 10 eingeformt sind. In diesem Zusammenhang weist die in Fig. 3 dargestellte Vorrichtung vor und hinter dem ersten oberen Transportband 12 jeweils eine an der Unterseite bzw. Oberseite der Schalldämmlage 2 angreifende Werkzeugeinrichtung 22 bzw. 23 zum Einbringen der die Hartschaumvorsprünge, d. h. die Abstandshalter, aufnehmenden Ausnehmungen 10 bzw. 9 auf.

Für die Herstellung einer Schalldämmplatte, bei der nur von einer der Hartschaumstofflagen Abstandshalter abstehen, fällt eine der beiden Werkzeugeinrichtungen 22, 23 weg. Zur Herstellung der Schalldämmplatte 1a wäre also nur die Werkzeugeinrichtung 22 erforderlich.

Die Schalldämmlage 2 wird also innerhalb der Vorrichtung mit ihrer Unterseite bzw. Oberseite an der betreffenden Werkzeugeinrichtung 22 bzw. 23 vorbeigeführt.

In Abwandlung der in Fig. 3 dargestellten Verhältnisse wäre es prinzipiell auch möglich, die der Oberseite der Schalldämmlage 2 zugeordnete Werkzeugeinrichtung 23 nicht hinter, sondern ebenfalls wie die Werkzeugeinrichtung 22 vor dem ersten oberen Transportband 12 anzuordnen.

Die mindestens eine Werkzeugeinrichtung 22, 23 kann eine Nadelwalze od.dgl. sein, die die Ausnehmungen 9 bzw. 10 in die Schalldämmlage 2 eindrückt.

## Patentansprüche

1. Vorrichtung zur Herstellung einer bei Gebäuden für Dächer, Wände und Decken zu verwendenden Schalldämmplatte (1;1a), die eine aus Schalldämm-Material bestehende Schalldämmlage (2;2a) und an die beiden Seiten der Schalldämmlage (2;2a) angeschäumte Hartschaumstofflagen (3,4;3a,4a) aufweist, mit einem unteren endlos umlaufenden Transportband (11) und einem oberen endlos umlaufenden, zum unteren Transportband (11) parallelen Transportband (12), das unter Bildung eines Durchlaufspaltes (17) oberhalb vom unteren Transportband (11) angeordnet ist, wobei in Transportrichtung (14) gesehen vor dem oberen Transportband (12) eine Schaumstoff-Zufuhreinrichtung (19) zum Aufschäumen des die untere Hartschaumstofflage (4;4a) ergebenden Schaumstoffs auf das untere Transportband (11) und eine Schalldämmlage-Zufuhrstation (20) zum Aufbringen der vorgefertigen Schalldämmlage (2) auf den die eine Hartschaumstofflage (4) ergebenden Schaumstoff angeordnet sind und wobei eine zweite Schaumstoff-Zufuhreinrichtung (21) zum Aufschäumen des die obere Hartschaumstofflage (3;3a) ergebenden Schaumstoffs auf die Schalldämmlage (2;2a) vorhanden ist, dadurch gekennzeichnet, daß in Transportrichtung gesehen die Schalldämmlage-Zufuhrstation (20) anschließend an die erste Schaumstoff-Zufuhreinrichtung (19) angeordnet ist, daß die Breite des Durchlaufspaltes (17) zwischen dem unteren Transportband (11) und dem oberen Transportband (12) im wesentlichen der Summe der Dicke (D1) der Schalldämmlage (2;2a) und der Dicke (D2) der unteren Hartschaumstofflage (4;4a) entspricht, daß in Transportrichtung gesehen hinter dem oberen Transportband (12) ein zweites oberes endlos umlaufendes, zum unteren Transportband (11) paralleles Transportband (13) vorhanden ist, das unter Bildung eines Durchlaufspaltes (18) oberhalb vom unteren Transportband (11) angeordnet ist, wobei die Breite des Durchlaufspaltes (18) zwischen dem unteren Transportband (11) und dem zweiten oberen Transportband (13) im wesentlichen der Dicke (D3) der Schalldämmplatte (1;1a) entspricht und die oberen Transportbänder (12,13) kürzer als das untere Transportband (11) sind, und daß die zweite Schaumstoff-Zufuhreinrichtung (21) zwischen den beiden oberen Transportbändern (12,13) angeordnet ist.

2. Vorrichtung nach Anspruch 1, dadurch gekennzeichnet, daß vor dem ersten oberen Transportband (12) eine an der Unterseite der Schalldämmlage (2) angreifende Werkzeugeinrichtung (22) und/oder hinter dem ersten oberen Transportband (12) eine an der Oberseite der Schalldämmlage (2) angreifende Werkzeugeinrichtung (23) zum Einbringen von Hartschaumstoffvorsprünge aufnehmenden Ausnehmungen (10 bzw. 9) angeordnet ist.

3. Vorrichtung nach Anspruch 1, dadurch gekennzeichnet, daß vor dem ersten oberen Transportband (12) eine an der Unterseite der Schalldämmlage (2) angreifende Werkzeugeinrichtung (22) und eine an der Oberseite der Schalldämmlage (2) angreifende Werkzeugeinrichtung angeordnet sind.

4. Vorrichtung nach Anspruch 2 oder 3, dadurch gekennzeichnet, daß die mindestens eine Werkzeugeinrichtung (22 bzw. 23) eine Nadelwalze od.dgl. ist.

## Claims

1. Device for the production of a sound-insulating panel (1; la) for use on the roofs, walls and ceilings of buildings, with a sound-insulating layer (2; 2a) comprising sound-insulating material and rigid foam layers (3,4; 3a,4a) foamed on to both sides of the sound-insulating layer (2; 2a), with a lower endless circulating conveyor belt (11) and an upper endless circulating conveyor belt (12) parallel to the lower conveyor belt (11) and arranged to form a feed-through gap (17) above the lower conveyor belt (11) wherein, viewed in the direction of movement (14), a foam feed unit (19) for foaming-on of the foam producing the lower rigid foam layer (4; 4a) on the lower conveyor belt (11) and a sound-insulating layer feed station (20) to apply the prefabricated sound-insulating layer (2) to the foam producing one rigid foam layer (4) are located before the upper conveyor belt (12), and wherein a second foam feed unit (21) is provided for foaming-on to the sound-insulating layer (2; 2a) the foam producing the upper rigid foam layer (3; 3a), characterized in that, viewed in the direction of movement, the sound-insulating layer feed station (20) is located after the first foam feed unit (19), that the width of the feed-through gap (17) between the lower conveyor belt (11) and the upper conveyor belt (12) corresponds substantially to the total of the thickness (D1) of the sound-insulating layer (2; 2a) and the thickness (D2) of the lower rigid foam layer (4; 4a), that viewed in the direction of movement there is after the upper conveyor belt (12) a second upper endless circulating conveyor belt (13) parallel to the lower conveyor belt (11), arranged above the lower conveyor belt (11) to form a feed-through gap (18), wherein the width of the feed-through gap (18) between the lower conveyor belt (11) and the second upper conveyor belt (13) corresponds substantially to the thickness (D3) of the sound-insulating panel (1; la), and the upper conveyor belts (12, 13) are shorter than the lower conveyor belt (11), and that the second foam feed unit (21) is located between the two upper conveyor belts (12, 13).

2. Device according to claim 1, characterized in that a tool device (22) acting on the underside of the sound-insulating layer (2) is provided before the first upper conveyor belt (12), and/or a tool device (23) acting on the upper side of the sound-insulating layer (2) to introduce recesses (10 and 9 respectively) accommodating rigid foam projections is provided after the first upper conveyor belt (12).

3. Device according to claim 1, characterized in that a tool device (22) acting on the underside of the sound-insulating layer (2) and a tool device acting on the upper side of the sound-insulating layer (2) are located before the first upper conveyor belt (12).

4. Device according to claim 2 or 3, characterized in that the tool device or tool devices (22 and 23 respectively) is or are a needle roller or the like.

## Revendications

1. Dispositif de fabrication d'une plaque d'isolation phonique (1; la) à utiliser dans des bâtiments, pour les toitures, les murs et les plafonds, qui présente une couche d'isolation phonique (2; 2a) constituée d'un matériau d'isolation phonique et de couches de mousse dure (3, 4; 3a, 4a) réalisées sur les deux faces de la couche d'isolation phonique (2; 2a), comportant une bande de transport inférieure (11) tournant sans fin et une bande de transport supérieure (12) tournant sans fin parallèle à la bande de transport inférieure (11), qui est montée au-dessus de la bande de transport inférieure (11) en formant une fente de passage (17), devant la bande de transport supérieure (12), vue dans le sens de transport (14), étant monté un dispositif d'amenée de mousse (19) pour faire mousser la mousse donnant la couche de mousse dure inférieure (4; 4a), sur la bande de transport (11) ainsi qu'un poste d'amenée de couche d'isolation phonique (20) pour appliquer la couche d'isolation phonique (2) préfabriquée sur la mousse donnant la couche de mousse dure (4) et un deuxième dispositif d'amenée de mousse (21) étant prévu pour faire mousser la mousse donnant la couche de mousse dure supérieure (3; 3a) sur la couche d'isolation phonique (2; 2a), caractérisé en ce que, vu dans le sens de transport, le poste d'amenée de couche d'isolation phonique (20) est monté à la suite du premier dispositif d'amenée de mousse (19), en ce que la largeur de la fente de passage (17) entre la bande de transport inférieure (11) et la bande de transport supérieure (12) correspond sensiblement à la somme de l'épaisseur (D1) de la couche d'isolation phonique (2; 2a) et de l'épaisseur (D2) de la couche de mousse dure inférieure (4; 4a), en ce que derrière la bande de transport supérieure (12), vue dans le sens de transport, est prévue une deuxième bande de transport supérieure (13) tournant sans fin, parallèle à la bande de transport inférieure (11), qui est montée au-dessus de la bande de transport inférieure (11) en formant une fente de passage (18), la largeur de la fente de passage (18) entre la bande de transport inférieure (11) et la deuxième bande de transport supérieure (13) correspondant sensiblement à l'épaisseur (D3) de la plaque d'isolation phonique (1; 1a) et les bandes de transport supérieures (12, 13) étant plus courtes que la bande de transport inférieure (11) et en ce que le deuxième dispositif d'amenée de mousse (21) est monté entre les deux bandes de transport supérieures (12, 13).

2. Dispositif selon la revendication 1, caractérisé en ce que devant la première bande de transport supérieure (12) est monté un dispositif à outil (22) agissant sur la face inférieure de la couche d'isolation phonique (2) et/ou derrière la première bande de transport supérieure (12) est monté un dispositif à outil (23) agissant sur la face supérieure de la couche d'isolation phonique (2), destiné à pratiquer des évidements (respectivement 10 et 9) logeant des saillies de mousse dure.

3. Dispositif selon la revendication 1, caractérisé en ce que devant la première bande de transport supérieure (12) sont montés un dispositif à outil (22) agissant sur la face inférieure de la couche d'isolation phonique (2) et un dispositif à outil agissant sur la face supérieure de la couche d'isolation phonique (2).

4. Dispositif selon la revendication 2 ou 3, caractérisé en ce que le ou les dispositif(s) à outil (22 ou 23) est (sont) un hérisson ou similaire.
